# FASCICULE DE BREVET EUROPEEN

(11) **EP 3 475 752 B1**
(45) Date de publication et mention de la délivrance du brevet: **22.02.2023**
(21) Numéro de dépôt: 17740446.4
(22) Date de dépôt: 22.06.2017
(51) Int. Cl.: G02B 21/06, G02B 7/00, G02B 7/02, G02B 21/16

(54) **MODULE D'ECLAIRAGE**
BELEUCHTUNGSMODUL
LIGHTING MODULE

(30) Priorité: 23.06.2016 FR 1655887
(43) Date de publication de la demande: 01.05.2019
(73) Titulaire: Bertin Technologies, 78180 Montigny-le-Bretonneux (FR)
(72) Inventeur: SAPPE, Eric, 13014 Marseille (FR)
(74) Mandataire: Hautier IP
(86) Numéro de dépôt international: PCT/FR2017/051673
(87) Numéro de publication internationale: WO 2017/220944

(56) Documents cités:
- US-A1- 2008 043 324
- US-A1- 2010 321 774
- US-A1- 2013 021 665

## Description

La présente invention se rapporte à un module d'éclairage pour un microscope à fluorescence ainsi qu'à un tel microscope.

Un microscope à fluorescence permet l'étude des propriétés organique et inorganiques d'un échantillon en utilisant la fluorescence émise par l'échantillon au lieu de la lumière réfléchie ou absorbée par l'échantillon. La fluorescence est basée sur le principe de l'émission spontanée par l'échantillon d'une lumière à une longueur d'onde particulière suite à l'excitation dudit échantillon à une longueur d'onde spécifique. L'échantillon peut-être naturellement fluorescent ou bien être traités avec des composés spécifiques, appelés fluorophores.

Classiquement, un microscope à fluorescence comprend des moyens d'éclairage aptes à émettre un faisceau de lumière vers un objectif puis vers un échantillon. Des moyens de filtrage sont généralement intercalés dans le trajet optique entre les moyens d'éclairage et l'objectif et dans le trajet optique de la lumière provenant de l'échantillon et avant réception par des moyens d'observation.

On connait de nombreux modules d'éclairage pour microscope à fluorescence, comme par exemple ceux décrits dans les documents US2010/321774A1, US2013/021665A1 ou encore US2008/043324A1. Toutefois, la plupart d'entre eux s'avèrent délicats à assembler et souffrent généralement d'un encombrement relativement important.

L'invention a notamment pour but d'apporter une solution simple, efficace et économique aux problèmes de l'art antérieur décrit précédemment.

A cet effet, elle propose un module d'éclairage, en particulier pour microscope à fluorescence, selon la revendication 1.

Le montage proposé par l'invention s'avère simple et rapide à réaliser puisque la lentille est directement bloquée sur un épaulement du corps et par un simple organe élastique. L'assemblage des éléments du module d'éclairage selon l'invention ne nécessite que peu de manipulations. De plus, lorsqu'une maintenance doit être effectuée sur la lentille, celle-ci peut être aisément remplacée en retirant préalablement l'organe élastique puis le support de filtre. Ce démontage n'impacte pas la source de lumière qui reste positionnée à la première extrémité du corps tubulaire.

Enfin, le positionnement de la lentille sur un épaulement annulaire du corps tubulaire permet un positionnement axial précis de la lentille relativement à la source d'éclairage, l'épaulement d'appui de la lentille étant à une distance invariante de la source de lumière.

Selon l'invention, le support comprend un segment annulaire formant une entretoise serrée entre une face convexe de la lentille et l'organe élastique.

Ce montage permet de serrer l'entretoise supportant le filtre par un organe élastique qui est appliqué sur l'entretoise, l'entretoise étant appliquée axialement sur la lentille, ce qui ne nécessite pas de vissage et donc évite un mouvement de rotation qui pourrait rayer la surface de la lentille. De plus, ce montage limite le nombre de pièces nécessaires à la fixation de la lentille et du filtre dans le corps tubulaire, permettant d'obtenir un module d'éclairage très compact.

Egalement, cette limitation du nombre de pièces permet de plus facilement respecter le positionnement axial de la source de lumière, de la lentille et du filtre les uns par rapport aux autres.

Préférentiellement, le segment annulaire est relié à une jupe cylindrique s'étendant en aval de la lentille, entourée par l'anneau d'arrêt et portant un filtre passe bande à son extrémité opposée à la lentille.

Le montage du filtre sur une jupe cylindrique entourée par un organe élastique de maintien de l'entretoise du support et par l'anneau d'arrêt de l'organe élastique permet d'assembler les différents éléments du module d'éclairage de manière simple et rapide tout en garantissant une compacité optimale du module d'éclairage.

Selon encore une autre caractéristique de l'invention, un diaphragme est intercalé entre la source de lumière et la lentille et est réalisé d'une seule pièce avec le corps.

L'ouverture du diaphragme peut présenter une section s'évasant vers la seconde extrémité du corps, de préférence tronconique. Une telle section de l'ouverture, augmentant continuellement vers l'aval, permet de limiter les réflexions de lumière sur la face interne de l'ouverture du diaphragme. Elle permet également un positionnement plus précis du diaphragme relativement à la source d'éclairage et à l'axe optique de la lentille.

La périphérie radialement externe de la lentille peut être engagée dans une gorge tronconique à section s'évasant vers la première extrémité du corps, de manière à réduire les contraintes mécaniques appliquées à la périphérie externe de la lentille.

Dans une réalisation pratique de l'invention, l'épaulement annulaire sépare une première partie amont de corps logeant le diaphragme d'une seconde partie aval de corps logeant la lentille, le support de filtre, l'organe élastique et l'anneau d'arrêt.

L'invention concerne également un microscope pour l'observation d'un échantillon comprenant :
- un ensemble d'objectifs,
- un ensemble de modules de filtrage, et
- un ensemble de module d'éclairage selon l'une des revendications précédentes,
les modules d'éclairage étant fixes et étant positionnés relativement aux modules de filtrage portés par un support mobile de manière à ce qu'un module d'éclairage soit associé en fonctionnement à un unique module de filtrage.

Selon une caractéristique particulière, une première tourelle porte l'ensemble d'objectifs et une seconde tourelle forme le support mobile portant l'ensemble de modules de filtrage, la première tourelle et la seconde tourelle étant portées par un même pivot et montées à rotation, indépendamment l'une de l'autre, autour de ce pivot, chaque objectif de la première tourelle et chaque module de filtrage de la seconde tourelle étant aptes à être agencé par rotation de la première tourelle et de la seconde tourelle dans une position active d'utilisation dans laquelle un module de la seconde tourelle est intercalé dans le trajet optique entre un objectif de la première tourelle et un détecteur.

De préférence, chaque module de filtrage comprend un boîtier comportant une première ouverture et une seconde ouverture de sorte que la lumière émise par l'échantillon traverse la première ouverture puis la seconde ouverture, le boîtier de chaque module de filtrage portant un filtre dichroïque agencé dans la première ouverture et adapté pour réfléchir la lumière émise par le module d'éclairage associé vers un objectif et permettre à la lumière d'une longueur d'onde prédéterminée de passer au travers du filtre dichroïque.

Enfin, chaque module de filtrage peut comprendre un filtre d'émission apte à rejeter la longueur d'onde de la source de lumière, ce filtre d'émission étant disposé dans la seconde ouverture.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en perspective du dessus du microscope selon l'invention, les moyens de capotage étant en vue éclatée ;
- la figure 2 est une vue schématique en perspective, de côté et de l'avant, de l'intérieur du microscope selon l'invention ;
- la figure 3 est une vue similaire à celle de la figure 2, depuis l'arrière et du dessus ;
- la figure 4 est une vue schématique en coupe du microscope selon l'invention, selon un plan vertical s'étendant d'avant en arrière et contenant le pivot ;
- la figure 5 est une vue à plus grande échelle de la zone délimitée en pointillée sur la figure 4 ;
- la figure 6 est une vue schématique en perspective de la première tourelle et de son mécanisme d'entrainement en rotation autour du pivot ;
- la figure 7 est une vue schématique de l'indexation de la première tourelle autour du pivot ;
- la figures 8 est une vue schématique en perspective de la première tourelle et de la seconde tourelle avec le mécanisme d'entrainement de la seconde tourelle ;
- la figure 9 est une vue schématique en perspective de la seconde tourelle seule et de son mécanisme d'entrainement autour du pivot ;
- la figure 10 est une vue schématique en perspective isolée de la seconde tourelle ;
- la figure 11A est une vue schématique en coupe isolée d'un module de filtrage ;
- la figure 11B est une vue schématique en perspective d'un module de filtrage ;
- la figure 12 est une vue schématique en perspective des moyens d'éclairage ;
- la figure 13 est une vue schématique en perspective et en coupe d'un module d'éclairage selon l'invention ;
- la figure 14 est une vue schématique d'une rondelle élastique intégrée au module d'éclairage de la figure 13.

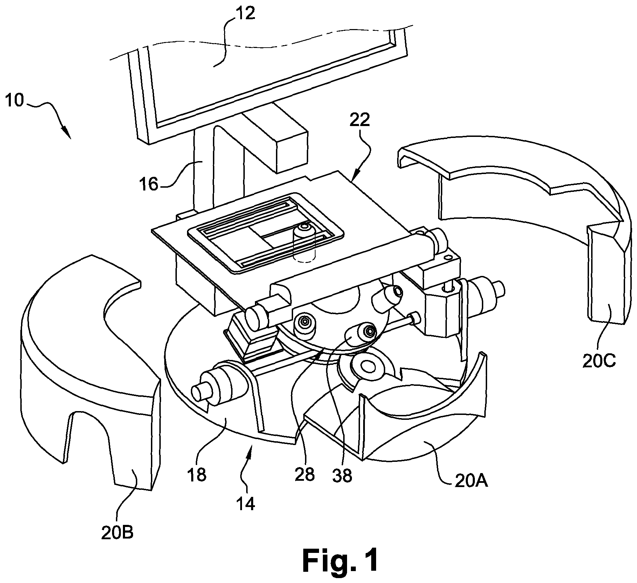

On se réfère tout d'abord à la figure 1 qui représente un exemple de réalisation du microscope 10 selon l'invention, ce microscope10 étant par exemple destiné à l'observation de la fluorescence d'un échantillon ou encore à l'observation en lumière transmise, éventuellement par contraste de phase de l'échantillon.

Comme représenté sur la figure 1, le microscope 10 comprend essentiellement :
- un écran tactile 12 d'affichage et de saisie de données par un opérateur ou utilisateur ;
- un bâti 14 de support de l'écran, comprenant un bras 16 ou mat portant l'écran 12 et relié à une extrémité opposée à l'écran à une base 18 sensiblement plane ;
- des moyens de capotage 20A, 20B, 20C portés par le bâti 14 et logeant un mécanisme de positionnement d'objectifs et de filtres, des moyens d'éclairage, des moyens motorisés, un détecteur 21 ainsi que des moyens de commande des moyens d'éclairage et des moyens motorisés ;
- une table 22 porte-échantillon pourvu de moyens de déplacement de l'échantillon sur la table, cette table 22 étant agencé au-dessus des éléments de capotage 20A, 20B, 20C.

Le microscope 10 peut comprendre des moyens de réglage de la planéité/stabilité de la base 18 du bâti 14, ces moyens comportant, par exemple, des tiges filetées 24 dont une extrémité est vissée dans la base 18 et une extrémité opposée comprend un disque 26 de support, la profondeur de vissage de chacune des tiges filetées 24 permettant d'ajuster la distance de la base aux disques 26 pour régler la planéité de la base et donc du bâti 14 du microscope 10.

Les moyens de capotage comprennent trois éléments distincts 20A, 20B, 20C, un premier élément latéral 20B, un second élément latéral 20C et un élément de capotage avant 20A, c'est-à-dire agencé en vis-à-vis d'un opérateur lorsque celui-ci utilise le microscope 10. Le capotage 20A avant est amovible par l'utilisateur afin de permettre un accès aux objectifs comme cela apparaitra plus clairement dans la suite de la description.

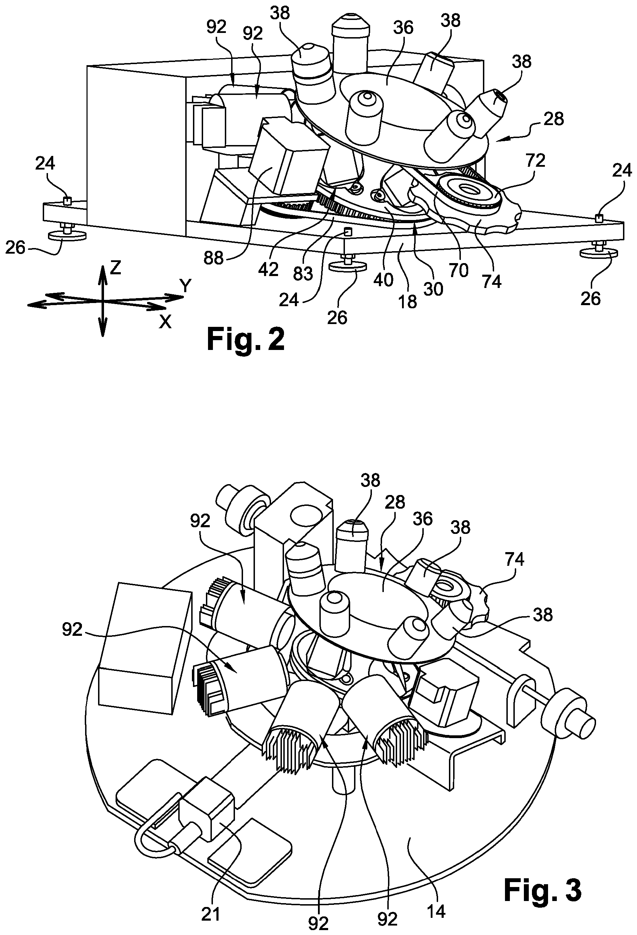

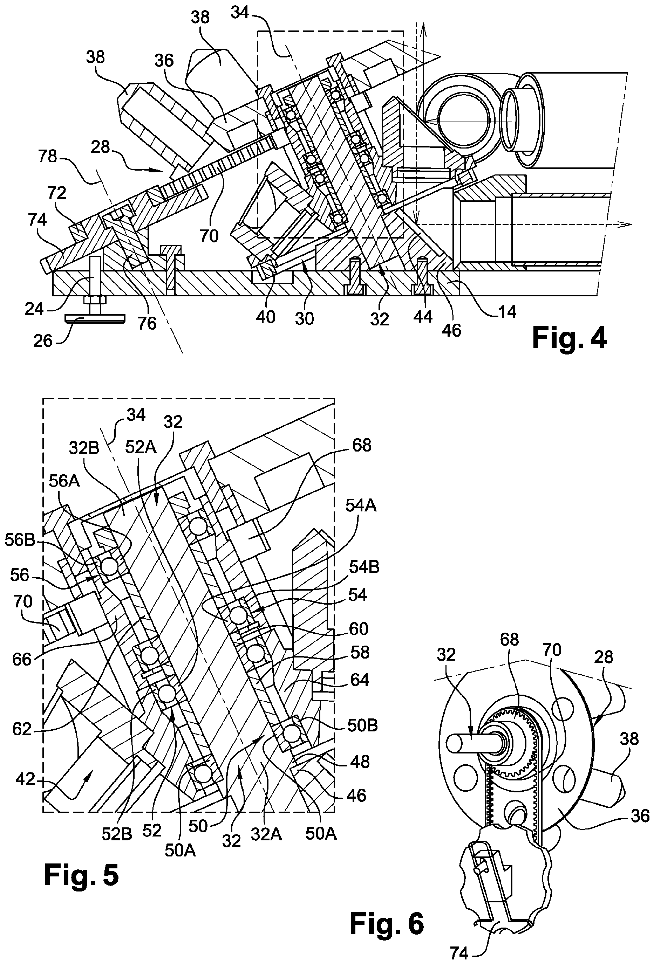

Le mécanisme de positionnement des objectifs et des filtres comprend une première tourelle 28 et une seconde tourelle 30 portées par un même pivot fixe 32 et montées en rotation autour de ce pivot 32 (figures 4 à 9). Chacune des première 28 et seconde 30 tourelles est apte à tourner indépendamment l'une de l'autre autour du pivot. Comme cela est visible, le pivot 32 est formé par une barre et est incliné en oblique par rapport à la verticale. Plus précisément, selon les trois directions orthogonales X, Y et Z de l'espace (figure 2), l'axe 34 du pivot 32 est contenu dans le plan XZ, c'est-à-dire un plan s'étendant d'avant en arrière, et sa normale dans le plan XZ qui est orientée vers l'avant est dirigée du haut vers le bas. L'axe 34 du pivot 32 peut être incliné d'un angle compris entre 5 et 60°, de préférence 30° par rapport à l'axe vertical ou axe Z. Cet angle est choisi pour permettre un accès simple aux objectifs de la première tourelle 28 par retrait de l'élément de capotage ou capot 20A. On comprend aisément que la base 18 du bâti 14 s'étend dans le plan XY lorsque le microscope 10 est en position d'utilisation.

Il est noté que l'axe de la première tourelle 28 et l'axe de la seconde tourelle 30 sont confondus en position de montage avec l'axe 34 du pivot 32 de sorte que la même référence est appliquée.

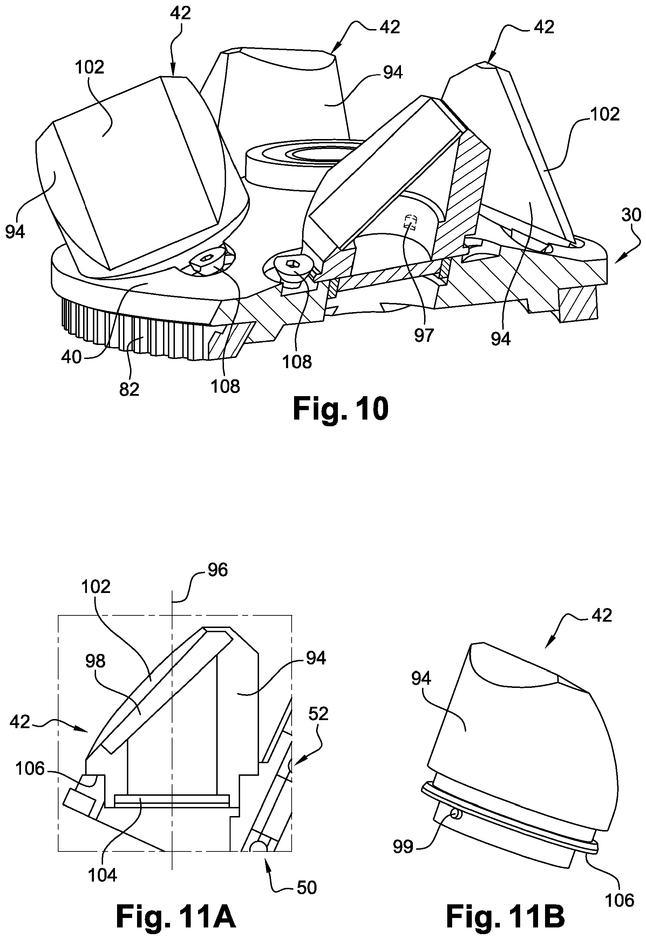

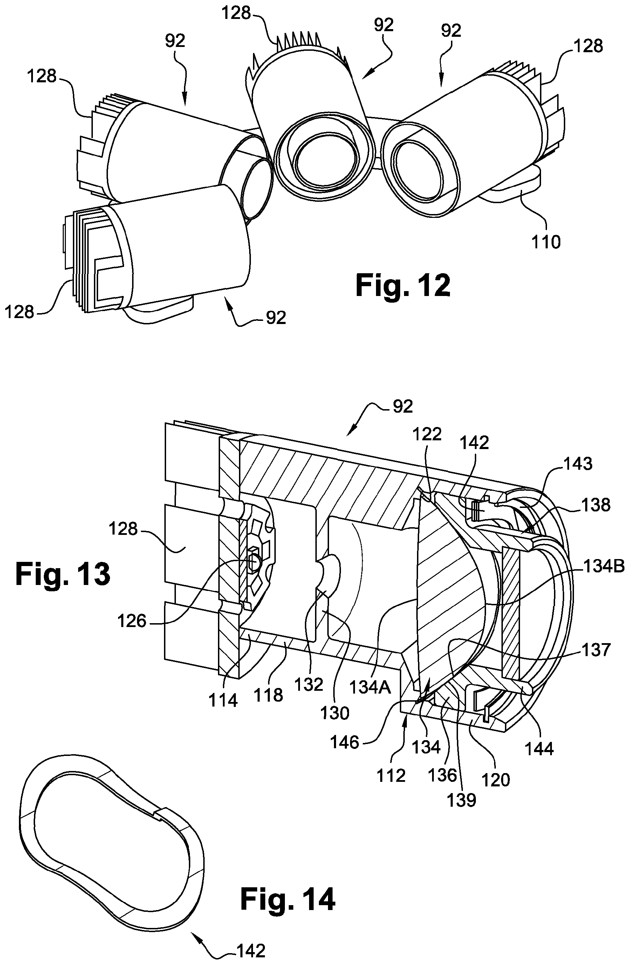

Comme représenté plus particulièrement sur les figures 2 et 4, la seconde tourelle 30 est agencée en dessous de la première tourelle 28 de sorte que la première tourelle 28 peut être qualifiée de tourelle supérieure et la seconde tourelle 30 peut être qualifiée de tourelle inférieure. La première tourelle 30 comprend un plateau 36 comportant des ouvertures régulièrement réparties autour de l'axe 34 de la première tourelle 28 et dans lesquels sont engagés des objectifs 38 de grandissement/focalisation. La seconde tourelle 30 comprend également un plateau 40 comportant des ouvertures régulièrement réparties autour de l'axe 34 de la seconde tourelle 30 et dans lesquels sont engagés des modules de filtrage 42. Le positionnement particulier des modules de filtrage 42 apparaitra plus clairement dans la suite de la description en référence aux figures 10 et 12.

Comme cela est représenté sur la figure 4, chaque module de filtrage 42 et chaque objectif est apte à être amené dans une position active dans laquelle un module de filtrage 42 est intercalé dans le trajet optique entre un objectif 38 de la première tourelle 28 et une surface optiquement réfléchissante 44 porté par un socle 46.

Le pivot 32 comprend deux extrémités inférieures 32A et supérieure 32B. L'extrémité inférieure 32A du pivot 32 est engagée et fixée dans un orifice du socle 46 solidaire de la base 18 du bâti14 (figures 4 et 5). Le pivot 32 comprend une nervure annulaire 48 formant une butée d'insertion de l'extrémité inférieure 32A du pivot 32 dans le socle 46.

La première tourelle 28 et la seconde tourelle 30 sont chacune guidée en rotation par un premier 50, 54 et un second 52, 56 paliers de roulements, plus particulièrement de roulements à billes. Chacun des paliers 50, 52, 54, 56 comprend une bague annulaire interne 50A, 52A, 54A, 56A solidaire du pivot fixe 32 et une bague annulaire externe 50B, 52B, 54B, 56B destinée à tourner avec une tourelle 28, 30. Le premier palier 50 de la tourelle inférieure 30 est porté par l'intermédiaire de sa bague interne 50A par la nervure annulaire 48 et est espacé de la bague interne 52A du second palier 52 par une entretoise 58 annulaire interne appliquée sur le pivot 32 et séparant les bagues annulaires internes 50A, 52A des premier et second paliers 50, 52 de la tourelle inférieure 30. Une cale 60 annulaire est intercalée entre le second palier 52 de la seconde tourelle 30 et le premier palier 54 de la première tourelle 28. Plus précisément, cette cale 60 est en contact avec les bagues internes 52A, 54A des paliers 52, 54 uniquement. Une autre entretoise 62 annulaire interne est intercalée entre les bagues 54A, 56A du premier palier 54 et du second palier 56 de la première tourelle 28 ou tourelle supérieure.

Plus précisément, le plateau 40 de la tourelle inférieure 30 comprend une ouverture centrale permettant le montage du plateau 40 autour du pivot 32. Le bord périphérique 64 radialement interne du plateau 40, délimitant l'ouverture centrale, est monté en butée sur la bague annulaire externe 50A du premier palier 50 de la première tourelle 30, en direction du socle 48 et l'extrémité supérieure dudit bord périphérique 64 est agencée avec un jeu axial en regard de l'extrémité inférieure d'un anneau 66 entourant le premier 54 et le second 56 paliers de la tourelle supérieure 28. Le bord périphérique interne 64 du plateau 40 de la tourelle inférieure 30 est rendu solidaire en rotation des bagues externes 50A, 52A des premier et second paliers 50, 52 de la seconde tourelle 30 et l'anneau 66 est rendu solidaire en rotation des bagues externes 54A, 56A des premier 54 et second 56 paliers de la première tourelle 28. Le plateau 36 de la tourelle supérieure 28 est fixé par vissage sur l'extrémité annulaire supérieure de l'anneau 66.

Ainsi, en fonctionnement, la première tourelle 28 peut tourner indépendamment de la seconde tourelle 30, mais reste solidaire axialement de celle-ci, c'est-à-dire le long de l'axe 34 du pivot 32.

Le positionnement en rotation de chacune de la première tourelle 28 et de la seconde tourelle 30, réalisé sur un même pivot 32 fixe, permet de garantir un bon positionnement relatif entre les modules de filtrage 42 et les objectifs 38. Egalement, les éventuels chocs sur le bâti 14 du microscope 10 n'induisent pas de désalignement des objectifs 38 relativement aux modules de filtrage 42.

Comme cela est visible sur les figures 4 à 6, une roue crantée 68 est montée autour et couplé en rotation avec l'anneau 66 de support du plateau 36 de la tourelle supérieure 28. Cette roue crantée 68 est en prise avec une courroie 70 de transmission également en prise avec une autre roue crantée 72 d'une molette 74 portée en rotation sur un pion 76 solidaire du bâti 14. Ce pion 76 s'étend selon un axe 78 sensiblement parallèle à l'axe du pivot 32. La molette 74 est prévue pour être accessible depuis l'extérieur du microscope lorsque les éléments de capotage sont en position sur le châssis 14.

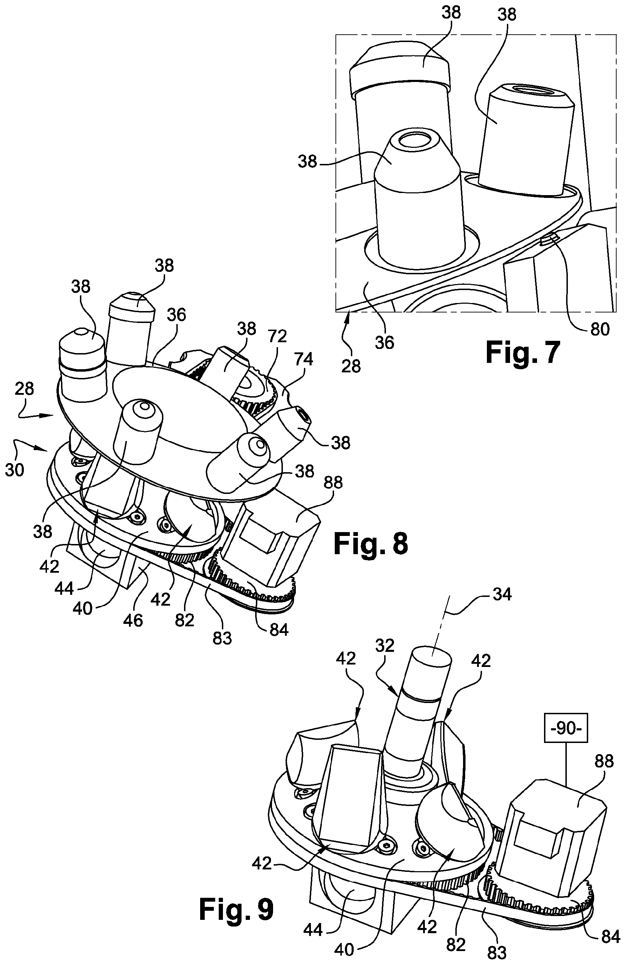

La figure 7 montre la coopération entre la périphérie externe du plateau 36 de la première tourelle 28 et le bâti 14 afin de réaliser une indexation en rotation de la première tourelle 28 sur le bâti 14 dans chacune de ses positions d'utilisation des objectifs 38. A cette fin, la périphérie externe comprend une pluralité de cavités concaves (non représentées) coopérant avec un poussoir à bille 80 porté par le bâti 14, la bille étant destinée à venir se loger dans une cavité concave du plateau 36 permettant ainsi de réaliser une retenue du plateau 36 de la première tourelle 28 dans une position active.

Le bord périphérique externe du plateau 40 de la seconde tourelle 30 comprend une denture 82 en prise avec une courroie 83, laquelle est également en prise avec une roue crantée 84 portée par un axe des moyens motorisés 88 reliés aux moyens de commande 90 qui sont également aptes à commander la mise en fonctionnement des moyens d'éclairage 92 comme cela apparaitra dans la suite de la description (figures 2, 8 et 9).

Chaque module de filtrage 42 comprend un boîtier tubulaire 94 d'axe 96 comportant une première ouverture 98 et une seconde ouverture 100 agencées aux extrémités du boîtier 94 tubulaire et traversées par l'axe 96 du boîtier 94 de l'élément de filtrage 42. La première ouverture 98 loge un filtre dichroïque 102 dont la propriété est d'être sélectif en réflexion et en transmission. Ainsi, un tel filtre dichroïque 102 est apte à réfléchir des longueurs d'ondes spécifiques et est apte à laisser passer d'autres longueurs d'ondes spécifiques. La seconde ouverture 100 loge un filtre d'émission ou filtre réjecteur 104 d'une longueur d'onde spécifique correspondant à la longueur d'onde d'excitation, plus particulièrement de la longueur d'onde d'excitation du module d'éclairage 92 associé. Le filtre dichroïque 102 de chaque module de filtrage 42 s'étend suivant un plan qui est incliné en oblique par rapport à l'axe 96 du boîtier 94 du module de filtrage 42. Le filtre d'émission 104 de chaque module de filtrage 42 s'étend suivant un plan qui est sensiblement perpendiculaire à l'axe 96 du boîtier 94. On notera qu'en position active d'utilisation l'axe 96 de chaque module de filtrage 42 est dans le trajet optique.

Egalement, chaque module de filtrage 42 comprend un épaulement annulaire 106 externe formant une butée de montage du module 42 dans une ouverture du plateau 40 (figure 11A). Chaque module 42 comprend des moyens d'indexage en rotation autour de l'axe 96 dans une ouverture du plateau 40 de la seconde tourelle 30 (figure 11B). Les moyens d'indexage comprennent une encoche 97 débouchant dans l'ouverture et dans laquelle est apte à venir s'engager une goupille 99 (figures 10 et 11B). Le plateau 40 comprend des moyens de blocage 108 du module dans une ouverture du plateau 40 de la seconde tourelle 30. Ces moyens de blocage comprennent deux vis 108 à tête excentrée, agencées de part et d'autre d'un module 42, et venant en appui par rotation sur le boîtier 94 du module 42.

Les moyens d'éclairage du microscope selon l'invention comprennent une pluralité de modules d'éclairage 92 portés par une platine 110 en forme d'arc de cercle solidaire du bâti 14 (figure 12). Les modules d'éclairage 92 sont positionnés de manière à émettre un faisceau de lumière d'éclairage incident en direction d'un module de filtrage 42 qui renvoie la lumière par son filtre dichroïque 102 vers un objectif 38 jusqu'à un échantillon. La lumière émise par l'échantillon traverse l'objectif puis le module de filtrage 42 et est réfléchie par la surface réfléchissante 44 portée par le socle 46 vers un détecteur 21 et ensuite affichée sur l'écran 12 de visualisation.

Les modules d'éclairage 92 sont configurés pour émettre des faisceaux de lumière dont les longueurs d'ondes sont différentes et chaque module d'éclairage 92 est associé à un unique module de filtrage 42. Ainsi, pour chaque couple donné associant un module d'éclairage 92 à un module de filtrage 42, on comprend que le filtre dichroïque 102 du module de filtrage 42 est apte à renvoyer la longueur d'onde du faisceau incident vers un objectif 38 jusqu'à un échantillon et que les propriétés de transmission du filtre dichroïque 102 permettent de transmettre la longueur d'onde émise par l'échantillon, le filtre d'émission 104 étant prévu pour absorber la lumière incidente.

Du fait de l'utilisation de modules d'éclairage 92 fixes, un module d'éclairage 92 et le module de filtrage 42 associé sont positionnés l'un par rapport à l'autre de manière à ce que le faisceau dudit module d'éclairage 92 soit renvoyé par le filtre dichroïque 102 dudit module de filtrage 42 vers un échantillon, lorsque ledit module de filtrage 42 et un objectif 38 sont dans une position active correspondant à une position d'utilisation. On comprend ainsi que les filtres dichroïques 102 des modules de filtrage 42 ne sont pas tous orientés de manière identique autour de l'axe de rotation 34 de la seconde tourelle 30.

L'utilisation de modules d'éclairage 92 fixes permet de les positionner de manière très précise sur le bâti 14, ce qui facilite l'orientation du faisceau de chacun des modules d'éclairage 92 vers les modules de filtrage 42. De plus, l'utilisation de modules d'éclairage 92, structurellement indépendants des modules de filtrage 42, permet de faciliter les interventions d'un utilisateur.

Dans l'exemple de réalisation représenté aux figures, le microscope 10 comprend quatre modules de filtrage 42 et quatre modules d'éclairage 92, un module d'éclairage 92 coopérant avec un module de filtrage 42 donné comme évoqué précédemment.

Chaque module d'éclairage 92 comprend un corps tubulaire 112 comportant une première extrémité 114 amont et une seconde extrémité 116 aval (figure 13). Ce corps tubulaire 112 est formé en une première partie 118 et une seconde partie 120. La première partie 118 et la seconde partie 120 ont une forme interne sensiblement cylindrique et définissent à leur jonction un épaulement annulaire. Le diamètre interne de la première partie est inférieur au diamètre interne de la seconde partie 120. La première extrémité 114 du corps 112 porte une source de lumière 126, du type à semiconducteurs, solidaire d'un dissipateur thermique 128, la source de lumière 126 étant apte à émettre un faisceau en direction d'un diaphragme 130 logé dans la première partie 118 du corps 112. Le diaphragme 130 comporte une ouverture 132 tronconique s'évasant en direction de la seconde partie 120 du corps 112. Le diaphragme 130 est avantageusement formé d'une seule pièce avec la première partie 118 comme représenté en figure 13. Une lentille 134 convergente est engagée depuis la seconde extrémité 116 du corps 112 sur l'épaulement annulaire 122 de la seconde partie 120 du corps 112. Elle comprend une face amont 134A sensiblement plane et une face aval 134B convexe sur laquelle est appliqué un segment annulaire 136 ou entretoise d'un support 138 de filtre 140 passe-bande qui est serré par un organe élastique 142. L'entretoise 136 du support de filtre 138 comprend une surface annulaire 137 incurvée concave complémentaire de la portion de surface annulaire 139 incurvée convexe sur laquelle elle est destinée à venir en contact de manière à obtenir un appui surface contre surface. Un anneau 143 fendu d'arrêt axial de l'organe élastique est monté dans une gorge de la seconde extrémité 116 du corps 112 et bloque axialement l'organe élastique précontraint élastiquement. Comme représenté en figure 14, l'organe élastique 142 est une rondelle métallique présentant des ondulations selon l'axe de la rondelle en direction circonférentielle. Le segment annulaire 136 du support 138 de filtre est ainsi appliqué sur la face convexe 134B de la lentille 134 par l'organe élastique 142 précontraint élastiquement.

Le segment annulaire 136 du support 138 est relié vers l'aval à une jupe cylindrique 144 dont l'extrémité libre, c'est-à-dire opposée à la lentille 134 porte un filtre 140 passe-bande, dit d'excitation, permettant de sélectionner précisément la bande de longueurs de la source d'éclairage, sortant d'un module d'éclairage 92.

Le montage du filtre 140 sur une jupe cylindrique 144 entourée par un organe élastique 142 de maintien de l'entretoise 136 du support 138 et par l'anneau 143 d'arrêt de l'organe élastique 142 permet d'assembler les différents éléments du module d'éclairage 92 de manière simple et rapide tout en garantissant une compacité optimale du module d'éclairage 92.

Comme on peut le voir sur la figure 13, la périphérie radialement externe de la lentille 134 est engagée dans une gorge tronconique 146 à section s'évasant vers l'amont ou vers la première extrémité 114 du corps 112. Cette configuration permet de limiter les contraintes mécaniques appliquées au montage et au serrage sur la lentille 134.

Dans une réalisation non représentée aux figures, le microscope 10 selon l'invention pourrait être utilisé pour réaliser un éclairage en lumière blanche, cette lumière étant alors émise depuis le dessus de la table porte-objets au travers de l'échantillon. Un anneau de contraste de phase pouvant être intercalé entre la source et la table porte-objets.

Les moyens d'éclairage pourraient également être aptes à émettre un faisceau de lumière blanche en direction d'une lame séparatrice portée par la seconde tourelle. Les moyens d'éclairage peuvent ainsi comprendre alors un module d'éclairage spécifique porté par la platine qui coopère avec un module de filtrage donné portant dans une première ouverture la lame séparatrice.

## Revendications

1. Module d'éclairage (92), en particulier pour microscope (10) à fluorescence, comprenant un corps tubulaire (112) comportant une source de lumière (126) à une première extrémité (114) et une lentille (134) engagée depuis une seconde extrémité (116) opposée à la première extrémité (114) sur un épaulement annulaire (122) interne du corps, un support (138) de filtre étant serré sur la lentille (134) par un organe élastique (142) précontraint axialement et bloqué axialement par un anneau (143) d'arrêt de la seconde extrémité du corps (116), **caractérisé en ce que** le support (138) comprend un segment annulaire (136) formant une entretoise serrée entre une face convexe de la lentille (134) et l'organe élastique (142).

2. Module (92) selon la revendication 1, dans lequel le segment annulaire (136) est relié à une jupe cylindrique s'étendant en aval de la lentille (134), entourée par l'anneau (143) d'arrêt et portant un filtre (140) passe bande à son extrémité opposée à la lentille (134).

3. Module (92) selon l'une des revendications 1 à 2, dans lequel un diaphragme (130) est intercalé entre la source de lumière (126) et la lentille (134) et est réalisé d'une seule pièce avec le corps.

4. Module (92) selon la revendication 3, dans lequel l'ouverture (132) du diaphragme (130) présente une section s'évasant vers la seconde extrémité (116) du corps.

5. Module (92) selon l'une des revendications précédentes, dans lequel la périphérie radialement externe de la lentille (134) est engagée dans une gorge tronconique à section s'évasant vers la première extrémité (116) du corps.

6. Module (92) selon l'une des revendications 3 ou 4, dans lequel l'épaulement annulaire (122) sépare une première partie (118) amont de corps logeant le diaphragme (130) d'une seconde partie (120) aval de corps logeant la lentille (134), le support (138) de filtre, l'organe élastique (142) et l'anneau (143) d'arrêt.

7. Microscope (10) pour l'observation d'un échantillon comprenant :
- un ensemble d'objectifs (38),
- un ensemble de modules de filtrage (42), et
**caractérisé en ce qu'**il comprend un ensemble de modules d'éclairage (92) selon l'une des revendications précédentes, les modules d'éclairage (92) étant fixes et étant positionnés relativement aux modules de filtrage (42) portés par un support mobile de manière à ce qu'un module d'éclairage (92) soit associé en fonctionnement à un unique module de filtrage (42).

8. Microscope (10) selon la revendication 7 dans lequel une première tourelle (28) porte l'ensemble d'objectifs (38) et une seconde tourelle (30) forme le support mobile portant l'ensemble de modules de filtrage (42), la première tourelle (28) et la seconde tourelle (30) étant portées par un même pivot et montées à rotation, indépendamment l'une de l'autre, autour de ce pivot, chaque objectif (38) de la première tourelle (28) et chaque module de filtrage (42) de la seconde tourelle (30) étant aptes à être agencé par rotation de la première tourelle (28) et de la seconde tourelle (30) dans une position active d'utilisation dans laquelle un module de filtrage (42) de la seconde tourelle (30) est intercalé dans le trajet optique entre un objectif (38) de la première tourelle (28) et un détecteur.

9. Microscope (10) selon la revendication 8, dans lequel chaque module de filtrage (42) comprend un boîtier comportant une première ouverture et une seconde ouverture de sorte que la lumière émise par l'échantillon traverse la première ouverture puis la seconde ouverture, le boîtier de chaque module de filtrage (42) portant un filtre dichroïque agencé dans la première ouverture et adapté pour réfléchir la lumière émise par le module d'éclairage associé vers un objectif et permettre à la lumière d'une longueur d'onde prédéterminée de passer au travers du filtre dichroïque.

10. Microscope (10) selon la revendication 9, dans lequel chaque module de filtrage (42) comprend un filtre d'émission apte à rejeter la longueur d'onde de la source de lumière, ce filtre d'émission étant disposé dans la seconde ouverture.

## Patentansprüche

1. Beleuchtungsmodul (92), insbesondere für ein Fluoreszenzmikroskop (10), umfassend einen röhrenförmigen Körper (112), der eine Lichtquelle (126) an einem ersten Ende (114) und eine Linse (134) beinhaltet, die von einem zweiten Ende (116) gegenüber dem ersten Ende (114) an einem inneren ringförmigen Ansatz (122) des Körpers eingelassen ist, wobei eine Filterhalterung (138) durch ein axial vorgespanntes elastisches Organ (142) auf der Linse (134) eingespannt ist, und axial durch einen Sicherungsring (143) des zweiten Endes des Körpers (116) geklemmt ist, **dadurch gekennzeichnet, dass** die Halterung (138) ein ringförmiges Segment (136) umfasst, das einen Abstandhalter bildet, der zwischen einer konvexen Seite der Linse (134) und dem elastischen Organ (142) eingespannt ist.

2. Modul (92) nach Anspruch 1, wobei das ringförmige Segment (136) mit einer zylindrischen Schürze verbunden ist, die sich stromabwärts der Linse (134) erstreckt, von dem Sicherungsring (143) umgeben ist, und an seinem gegenüberliegenden Ende zur Linse (134) einen Bandpassfilter (140) trägt.

3. Modul (92) nach einem der Ansprüche 1 bis 2, wobei eine Blende (130) zwischen der Lichtquelle (126) und der Linse (134) eingesetzt ist, und in einem Stück mit dem Körper gefertigt ist.

4. Modul (92) nach Anspruch 3, wobei die Öffnung (132) der Blende (130) einen sich zum zweiten Ende (116) des Körpers hin erweiternden Querschnitt aufweist.

5. Modul (92) nach einem der vorstehenden Ansprüche, wobei die radial äußere Peripherie der Linse (134) in eine kegelstumpfförmige Nut mit einem Querschnitt eingelassen ist, der sich zu einem ersten Ende (116) des Körpers hin erweitert.

6. Modul (92) nach einem der Ansprüche 3 oder 4, wobei der ringförmige Ansatz (122) einen ersten stromaufwärts gelegenen Körperteil (118), der die Blende (130) aufnimmt, von einem zweiten stromabwärts gelegenen Körperteil (120) trennt, der die Linse (134), die Filterhalterung (138), das elastische Organ (142) und den Sicherungsring (143) aufnimmt.

7. Mikroskop (10) zur Beobachtung einer Probe, umfassend:
- eine Objektivbaugruppe (38),
- eine Filtermodulbaugruppe (42), und
**dadurch gekennzeichnet, dass** es eine Beleuchtungsmodulbaugruppe (92) nach einem der vorstehenden Ansprüche umfasst, wobei die Beleuchtungsmodule (92) fix sind, und in Bezug auf die Filtermodule (42) positioniert sind, die derart von einer beweglichen Halterung getragen werden, dass ein Beleuchtungsmodul (92) im Betrieb einem einzigen Filtermodul (42) zugeordnet ist.

8. Mikroskop (10) nach Anspruch 7, wobei ein erster Revolver (28) die Objektivbaugruppe (38) trägt, und ein zweiter Revolver (30) die bewegliche Halterung bildet, die die Filtermodulbaugruppe (42) trägt, wobei der erste Revolver (28) und der zweite Revolver (30) durch ein selbes Drehgelenk getragen werden und unabhängig voneinander um dieses Drehgelenk herum drehend angebracht sind, wobei jedes Objektiv (38) des ersten Revolvers (28) und jedes Filtermodul (42) des zweiten Revolvers (30) imstande sind, durch Drehen des ersten Revolvers (28) und des zweiten Revolvers (30) in einer aktiven Nutzungsposition angeordnet zu werden, in der ein Filtermodul (42) des zweiten Revolvers (30) in den Strahlengang zwischen einem Objektiv (38) des ersten Revolvers (28) und einem Detektor eingefügt ist.

9. Mikroskop (10) nach Anspruch 8, wobei jedes Filtermodul (42) ein Gehäuse umfasst, das eine erste Öffnung und eine zweite Öffnung beinhaltet, sodass das von der Probe ausgegebene Licht die erste Öffnung, danach die zweite Öffnung durchquert, wobei das Gehäuse eines jeden Filtermoduls (42) einen dichroitischen Filter trägt, der in der ersten Öffnung angeordnet ist, und angepasst ist, um das von dem zugeordneten Beleuchtungsmodul ausgegebene Licht zu einem Objektiv zu reflektieren, und es dem Licht mit einer vorbestimmten Wellenlänge zu erlauben, durch den dichroitischen Filter hindurch zu verlaufen.

10. Mikroskop (10) nach Anspruch 9, wobei jedes Filtermodul (42) einen Ausgabefilter umfasst, der imstande ist, die Wellenlänge der Lichtquelle abzuweisen, wobei dieser Ausgabefilter in der zweiten Öffnung angeordnet ist.

## Claims

1. Lighting module (92), in particular for a fluorescence microscope (10), comprising a tubular body (112) including a light source (126) at a first end (114) and a lens (134) inserted from a second end (116) opposite to the first end (114) on an inner annular shoulder (122) of the body, a filter support (138) being fitted onto the lens (134) by an elastic member (142) that is axially pre-stressed and axially blocked by a stop ring (143) of the second end of the body (116), **characterised in that** the support (138) comprises an annular segment (136) forming a spacer fitted between a convex face of the lens (134) and the elastic member (142).

2. Module (92) according to claim 1, wherein the annular segment (136) is connected to a cylindrical sleeve extending downstream of the lens (134), surrounded by the stop ring (143) and carrying a band-pass filter (140) at its end opposite to the lens (134).

3. Module (92) according to one of claims 1 to 2, wherein a diaphragm (130) is interposed between the light source (126) and the lens (134) and is made integral with the body.

4. Module (92) according to claim 3, wherein the opening (132) of the diaphragm (130) has a section flaring towards the second end (116) of the body.

5. Module (92) according to one of the preceding claims, wherein the radially outer periphery of the lens (134) is inserted into a frustoconical groove with a section flaring towards the first end (116) of the body.

6. Module (92) according to one of claims 3 or 4, wherein the annular shoulder (122) separates a first upstream body portion (118) housing the diaphragm (130) of a second downstream body portion (120) housing the lens (134), the filter support (138), the elastic member (142) and the stop ring (143).

7. Microscope (10) for observing a sample comprising:
- a set of objective lenses (38),
- a set of filtering modules (42), and
**characterised in that** it comprises a set of lighting modules (92) according to one of the preceding claims, the lighting modules (92) being fixed and being positioned relative to the filtering modules (42) carried by a movable support such that a lighting module (92) is associated during operation with a unique filtering module (42).

8. Microscope (10) according to claim 7, wherein a first turret (28) carries the set of objective lenses (38) and a second turret (30) forms the movable support carrying the set of filtering modules (42), the first turret (28) and the second turret (30) being carried by the same pivot and rotatably mounted, independently of each other, around this pivot, each objective lens (38) of the first turret (28) and each filtering module (42) of the second turret (30) being able to be arranged by rotation of the first turret (28) and of the second turret (30) in an active position of use, wherein a filtering module (42) of the second turret (30) is interposed in the optical path between an objective lens (38) of the first turret (28) and a detector.

9. Microscope (10) according to claim 8, wherein each filtering module (42) comprises a case including a first opening and a second opening so that the light emitted by the sample passes through the first opening then the second opening, the case of each filtering module (42) carrying a dichroic filter arranged in the first opening and adapted to reflect the light emitted by the associated lighting module towards an objective lens and to enable the light of a predetermined wavelength to pass throughout the dichroic filter.

10. Microscope (10) according to claim 9, wherein each filtering module (42) comprises an emission filter able to reject the wavelength of the light source, this emission filter being disposed in the second opening.
